# DEMANDE DE BREVET EUROPEEN

(11) **EP 3 713 071 A1**
(43) Date de publication de la demande: **23.09.2020**
(21) Numéro de dépôt: 19305350.1
(22) Date de dépôt: 21.03.2019
(51) Int. Cl.: H02M 7/42, H02M 7/06, H02M 3/335, H02M 7/5387

(54) **DISPOSITIF D'ALIMENTATION POUR FOURNIR DES TENSIONS D'ALIMENTATION ADAPTÉES À DIFFÉRENTS TYPES D'APPAREILS ÉLECTRIQUES**

(71) Demandeur: Air Serenity, 91400 Orsay (FR)
(72) Inventeur: YOUSSEF, Joseph, 91300 MASSY (FR)
(74) Mandataire: Chaffraix, Jean

(57) **Abrégé**

Ce dispositif (1) comportant des bornes d'entrée (IN) pour être connecté à une source d'énergie (W), une série de bornes de sortie (OU;) pour être connecté à différents appareils (AP1, AP2, AP3, AP4, AP5) en leur fournissant des tensions de sortie adaptées à leur alimentation, un premier organe de transformation formé d'un ensemble de circuits interrupteurs pour fournir à partir des tensions présentes sur lesdites bornes d'entrée des tensions de formes variées en fonction d'une première commande élaborée par un circuit de commande sous la dépendance d'un pupitre de commande pour déterminer la tension aux bornes de sortie. Ce dispositif est particulièrement adapté à l'alimentation d'appareils purificateurs d'air qui exigent des tensions d'alimentation variées en fonction du traitement de chacune des familles de pollutions et souvent des tensions en forme d'impulsions de haute tension et aussi des tensions usuelles pour alimenter les appareils électroniques.

## Description

La présente invention concerne un dispositif d'alimentation pour fournir des tensions d'alimentation adaptées à différents types d'appareils électriques, dispositif comportant des bornes d'entrée pour être connecté à une source d'énergie des bornes de sortie pour être connecté auxdits appareils en leur fournissant des tensions de sortie qui leur sont adaptées, un premier organe de transformation formé d'un ensemble de circuits interrupteurs pour fournir à partir des tensions présentes (tel que par exemple tension réseau AC 110-220 - 50Hz) sur lesdites bornes d'entrée des tensions de formes variées en fonction d'une première commande élaborée par un circuit de commande sous la dépendance d'un pupitre de commande pour déterminer les tensions à fournir aux bornes de sortie.

Dans la vie courante, on est souvent confronté aux problèmes d'alimentation des appareils nécessitant des tensions/ou fréquences de valeurs diverses ou même des signaux de tensions présentant des caractéristiques impulsionnelles nécessitées par exemple pour les lampes à décharge fonctionnant avec ce type de signaux. Ainsi, pour satisfaire ces besoins en tensions diverses, selon l'art antérieur, on utilise différents boîtiers qui, chacun, fournit la tension requise à l'appareil qui lui est connecté. Cette multiplication de boîtiers est considérée comme désavantageuse, notamment en ce qui concerne leur encombrement et le nombre de fils électriques que cela impose.

Il est à noter que pour réaliser les différentes conversions de tension, il est connu d'utiliser des tensions impulsionnelles comme cela est décrit notamment dans le document de brevet FR2926183 qui propose un système d'alimentation pour une lampe à décharge. L'allumage de la lampe est obtenu par l'application de tensions impulsionnelles. Ce système est donc affecté pratiquement uniquement à ce genre de lampe.

La présente invention propose un dispositif du genre mentionné dans le préambule qui peut s'appliquer à différents appareils nécessitant des tensions de types variés : tensions continues, tensions sinusoïdales ou impulsionnelle à plus ou moins haute fréquence et à des amplitudes variées, ce qui est souvent nécessité dans les purificateurs d'air. En effet, pour le traitement des particules on utilise généralement des tensions continues de quelques kV. Pour générer un plasma (de type DBD ou corona), on peut utiliser des signaux impulsionnels de quelques kV ou bien des signaux sinusoïdaux. Enfin, pour l'utilisation d'une fonction ionisation, on utilise généralement des signaux sinusoïdaux à haute fréquence de dizaine de kHz.

Pour cela, un tel dispositif est remarquable en ce qu'il comporte, en outre, une pluralité d'organes de transformation de sortie reliés audit premier organe de transformation pour fournir des tensions de sorties adéquates auxdits appareils.

L'idée de base de l'invention consiste à utiliser un organe de transformation opérant sur la base d'impulsion et utiliser sa tension de sortie pour la transformer, ou non, à différentes tensions appropriées. Ceci peut se rencontrer lorsqu'il y a nécessité d'alimenter un appareil purificateur d'air pour lequel des tensions impulsionnelles de faible durée présentent de fortes amplitudes à quelques kHz mais également des signaux sinusoïdaux à quelques dizaines de kHz. Ces différentes impulsions sont traitées pour obtenir des tensions plus conventionnelles, entre autres, des tensions pour alimenter des ordinateurs de bureau (12 à 24V DC) ou plus simplement pour assurer la charge d'un appareil tel qu'un téléphone dit intelligent (smartphones) 5V DC.

La description suivante accompagnée des dessins ci-annexés, le tout donné à titre d'exemple non limitatif, fera bien comprendre comment l'invention peut être réalisée. Dans les dessins :
- la figure 1 montre un exemple d'utilisation d'un dispositif conforme à l'invention implantée à l'intérieur d'une habitation,
- la figure 2 montre un exemple de réalisation d'un dispositif conforme à l'invention élaboré à partir d'une structure dite hiérarchisée,
- la figure 3 montre un schéma de principe simplifié d'un dispositif d'alimentation conforme à l'invention,
- la figure 4 montre une variante de réalisation de l'invention,
- la figure 5 est une vue d'un boîtier de bureau incorporant un pupitre de commande convenant à l'invention.

Sur ces figures, les éléments communs portent tous les mêmes références sur toutes les figures.

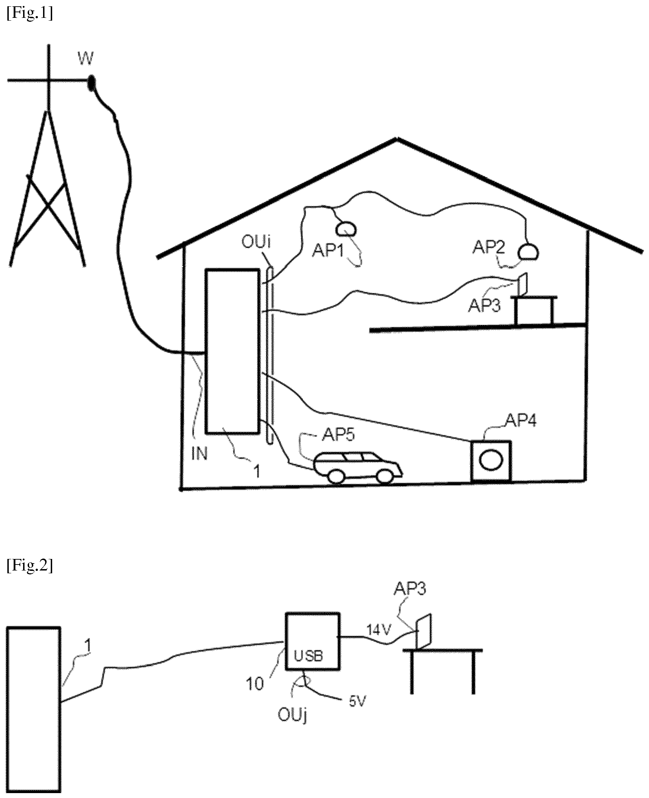

A la figure 1, on montre un exemple d'application du dispositif d'alimentation conforme à l'invention. Ce dispositif portant la référence 1 est disposé à l'intérieur d'un local d'habitation (sortie du panneau électrique). Il est destiné à fournir des tensions d'alimentation adaptées à différents types d'appareils électriques AP1, AP2, AP3, AP4 et AP5 qui se connectent à ses bornes de sortie OUi. Ces tensions d'alimentation d'appareil sont élaborées par ledit dispositif 1 à partir d'une source de tension W connectée aux bornes d'entrée IN. La source de tension W peut être le réseau électrique disponible dans le voisinage, ou tout autre source d'énergie renouvelable (piles photovoltaïques, éolienne etc.). Ainsi, le dispositif 1 fournit les tensions convenables à des dispositifs d'éclairage AP1, AP2 à un ordinateur AP3, à un lave-linge AP4 et/ou la charge d'une voiture à traction électrique AP5.

Selon un aspect de l'invention, il est possible de réaliser une hiérarchisation du dispositif de l'invention comme cela est montré à la figure 2. Ainsi, une partie du dispositif de l'invention, portant la référence 10, peut être affectée à l'alimentation de dispositifs informatiques. Cette partie 10 est déportée de façon à se trouver placée près de l'ordinateur AP3 pour lui fournir la tension d'alimentation requise (boitier alimentation DC à voltage réglable). Cette partie 10 peut comporter une série de prises USB OUj sur lesquelles différents appareils susceptibles d'être alimentés par ce moyen peuvent être branchés. Selon un aspect de l'invention, cette partie est donc alimentée à partir du dispositif 1.

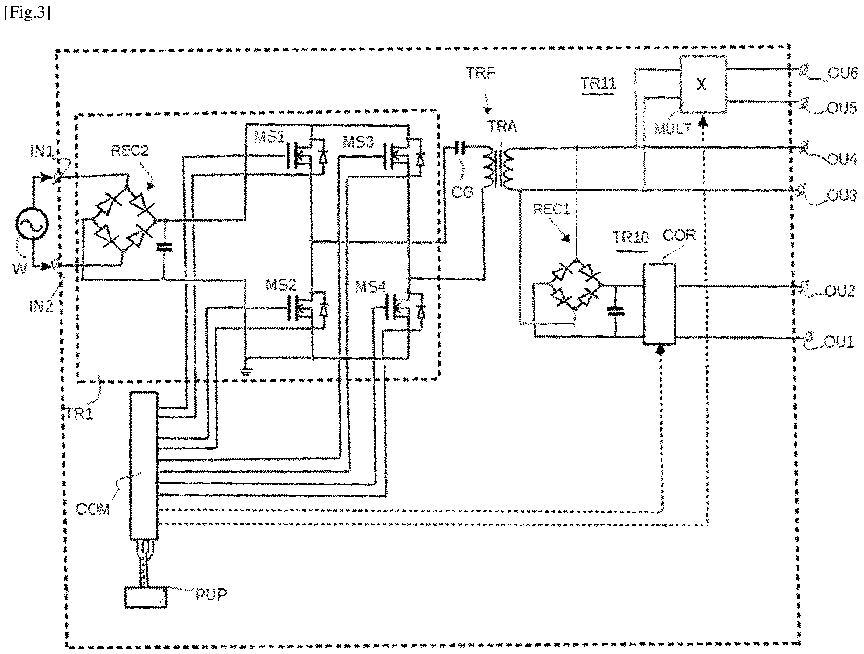

A la figure 3, on montre un mode de réalisation d'un dispositif 1 conforme à l'invention. Ce dispositif comporte : d'une part, des bornes d'entrée IN1 et IN2 pour être connecté à une source de tension W constituée, par exemple, par le réseau électrique domestique et comporte, d'autre part, différentes sorties : des sorties OU1, OU2 pour fournir des tensions continues, des sorties OU3, OU4, pour des tensions d'allure impulsionnelle - régime pulsé, monopolaire, (positive ou négative) ou bipolaire (positive puis négative ou négative puis positive) - et des sorties OU5 et OU6 pour fournir une tension sinusoïdale. Les fréquences et amplitudes de tension sont réglables de façon indépendante. Il est prévu un premier organe de transformation TR1 dont l'entrée est reliée aux bornes IN1 et IN2 et qui est formé d'un ensemble de circuits interrupteurs (MS1, MS2, MS3, MS4), dans l'exemple des MOSFET, pour fournir des tensions de formes variées en fonctions de signaux de commande élaborés par un circuit de commande COM sous la dépendance d'un pupitre de commande PUP pour déterminer les différentes tensions auxdites bornes de sortie OU1, OU2, OU3, OU4, OU5 et OU6 nécessitées par les appareils prévus pour avoir la possibilité d'être connectés auxdites bornes de sortie.

Le dispositif 1 comporte, en outre, un premier organe de sortie TRIO relié audit premier organe de transformation TR1 par l'intermédiaire d'un organe séparateur TRF qui est constitué par un transformateur TRA et d'un condensateur CG prévu notamment pour un découplage galvanique. Cet organe de sortie TRIO comporte un premier circuit redresseur REC1 pour fournir une première sorte de signaux aux sorties OU1 et OU2 de sortie. Dans le cadre de l'exemple de réalisation, la tension de sortie sera alors une tension continue.

Il est prévu dans cet exemple décrit un deuxième organe de sortie TR11 constitué essentiellement par un circuit multiplicateur de tension MULT pour adapter la tension aux bornes OU5 et OU6 à un appareil qui le nécessite. Les circuits multiplicateurs de tension sont bien connus dans la technique et il n'y a pas lieu de le décrire en détail. Ce circuit MULT est connecté au transformateur TRA.

Les bornes OU3 et OU4 reçoivent les tensions issues de l'organe TR1.

Pour régler/choisir la fréquence de fonctionnement voulue on joue sur l'ouverture/fermeture des MS 1-2-3-4.

Le premier organe de transformation TR1 comporte tout d'abord un deuxième circuit redresseur REC2 pour transformer en tension continue les tensions alternatives que délivre la source de tension W. La tension continue de ce redresseur REC2 est appliquée à un pont de circuits interrupteurs formé des transistors MOS MS1, MS2, MS3, MS4 comme cela a été dit. Les trajets source drain des transistors MS1, MS2 sont connectés en série aux sorties du circuit redresseur REC2. Il en est de même pour les transistors MS3 et MS4. Pour les rendre passants ou bloqués ces transistors reçoivent des signaux de commande élaborés par le circuit de commande COM. La tension de sortie de ce pont est prélevée au trajet source drain des transistors MS1 et MS2, d'une part, et au trajet des transistors MS3 et MS4, d'autre part.

Ce circuit de commande COM constitué, par exemple par un microcontrôleur, adapte ses commandes en fonction des informations provenant d'un pupitre de commande PUP qui détermine ainsi l'allure des signaux désirés : ce pupitre peut être formé par un système de commande constitué par un programme implémenté directement dans le système ou par exemple dans un « smartphone » (téléphone intelligent) pour le contrôle à distance. Ce circuit de commande déterminant les états passant ou bloqués des interrupteurs MS1, MS2 MS3 et MS4 peut également apporter des commandes de correction aux circuits MULT et aussi à un étage de correction COR inséré à la sortie du circuit redresseur REC1, prévu pour adapter les tensions à ces sorties OU1 et OU2. Le pupitre PUP peut donc se situer au niveau des circuits électroniques précités et aussi d'une manière déportée communicant à ces circuits par tout moyen de transmission : Bluetooth, circuit Internet, circuit Intranet etc.

Ainsi, il est possible d'avoir au niveau des bornes OU3 et OU4 des tensions impulsionnelles de valeurs variées, au niveau des bornes OU5 et OU6, des tensions sinusoïdales et au niveau des bornes OU1 et OU2 des valeurs usuelles DC pour des appareils électroniques mais également pour une fonction de précipitation électrostatique d'un système de traitement de l'air.

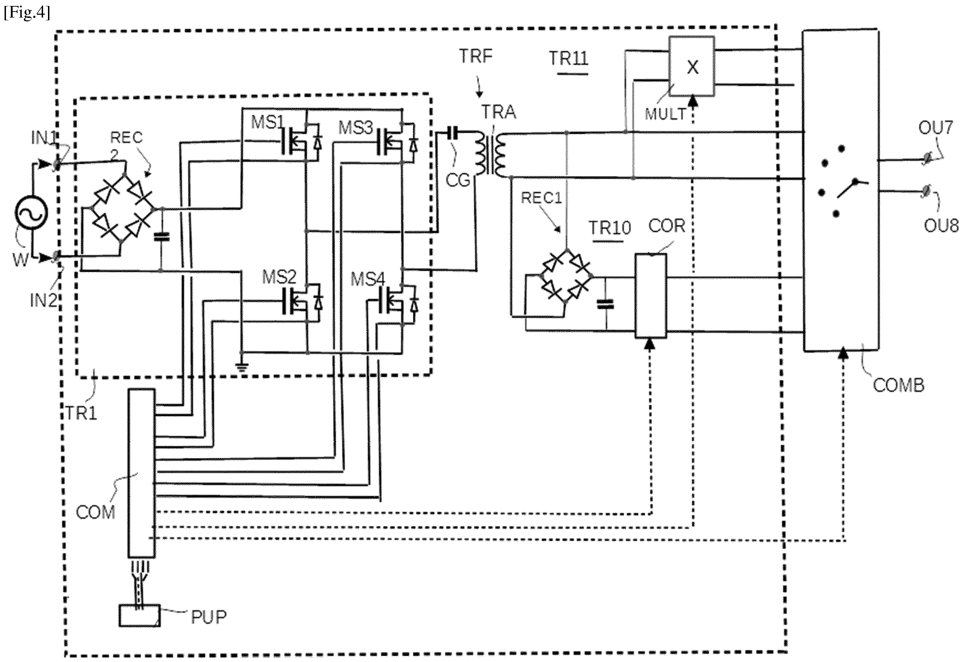

La figure 4 montre que ces différentes tensions peuvent être rendues disponibles sur des fils reliés aux bornes OU7 et OU8 interconnectées aux bornes OU1, OU2, OU3, OU4, OU5, OU6 et OU7 par un circuit de combinaison COMB qui est sous la dépendance du circuit COM. Cette variante de réalisation de l'invention permet donc de transmettre différentes tensions ayant des valeurs différentes (amplitude, fréquence, nature impulsionnelle) sur une seule sortie.

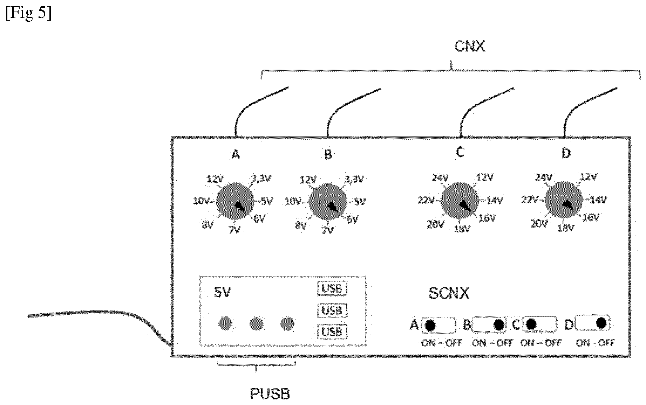

La figure 5 est un exemple de vue d'un boîtier de bureau incorporant un pupitre de commande convenant à l'invention. Différents connecteurs CNX sont branchés aux points de connexion A, B, C, D. Les valeurs de tension à ces points sont déterminées par des commutateurs rotatifs placés au voisinage de ces points de connexion. Il est à noter que l'on peut prévoir des connecteurs de toute nature. Des interrupteurs SCNX associés à chacun de ces points de connexions peuvent mettre hors service ces connecteurs CNX.

D'une manière avantageuse, un emplacement PUSB est disposé sur ce pupitre avec une pluralité de connecteurs du genre USB ou micro USB pour alimenter différents appareils proches de l'utilisateur.

## Revendications

1. Dispositif pour fournir des tensions d'alimentation adaptées à différents types d'appareils électriques (AP1, AP2, ..., AP5), dispositif comportant des bornes d'entrée (IN1, IN2) pour être connecté à une source d'énergie (W), des bornes de sortie (OU1, OU2, OU3, ..., OU6) pour être connecté auxdits appareils (APP) en leur fournissant des tensions de sortie qui leur sont adaptées, un premier organe de transformation (TR1) formé d'un ensemble de circuits interrupteurs (MS1, MS2, MS3, MS4) pour fournir à partir des tensions présentes (par exemple la tension réseau AC 110-220 - 50Hz) sur lesdites bornes d'entrée des tensions de formes variées en fonction d'une première commande élaborée par un circuit de commande (COM) sous la dépendance d'un pupitre de commande (PUP) pour déterminer les tensions à fournir aux bornes de sortie (OU1, OU2, ..., OU6) **caractérisé en ce qu'**il comporte, en outre, une pluralité d'organes de transformation de sortie (TRIO, TR11) reliés audit premier organe de transformation (TR1) pour fournir des tensions de sortie désirées.

2. Dispositif pour fournir des tensions d'alimentation selon la revendication 1 **caractérisé en ce que** les tensions de sortie du premier organe de transformation (TR1) sont disponibles sur des bornes de sortie (OU3, OU4) pour un REGIME PULSE : monopolaire (positive ou négative) ou bipolaire (positive puis négative ou négative puis positive)

3. Dispositif pour fournir des tensions d'alimentation selon la revendication 1 ou 2 **caractérisé en ce qu'**un des organes de transformation de sortie (TRIO) est formé à partir d'un redresseur de tension (REC1) connecté en sortie du premier organe de transformation (TR1) pour un régime CONTINU.

4. Dispositif pour fournir des tensions d'alimentation selon l'une des revendications 1 à 3 **caractérisé en ce qu'**un des organes de transformation de sortie (TR11) est formé à partir d'un multiplicateur de tension (MULT) connecté en sortie du premier organe de transformation (TR1) pour un régime SINUSOÏDAL.

5. Dispositif pour fournir des tensions d'alimentation selon l'une des revendications 1 à 4 pour lequel la source d'énergie est une source de tension alternative **caractérisé en ce que** le premier organe de transformation (TR1) comporte un deuxième circuit redresseur (REC2) pour fournir une tension continue audit ensemble de circuits interrupteurs.

6. Dispositif pour fournir des tensions d'alimentation selon l'une des revendications 1 à 5 **caractérisé en ce que** lesdits éléments interrupteurs sont constitués par des transistors MOS qui peuvent être montés en pont.

7. Dispositif pour fournir des tensions d'alimentation selon l'une des revendications 1, 2, 3 et 4 **caractérisé en ce que** l'organe de commande (COM) est formé à partir d'un microcontrôleur piloté par un pupitre de commande (PUP) sur lequel il est possible de déterminer la valeur et la nature des tensions fournies auxdites bornes de sortie dudit dispositif.

8. Dispositif pour fournir des tensions d'alimentation selon l'une des revendications 1 à 7 **caractérisé en ce qu'**il est prévu un transformateur (TRA) à la sortie du premier organe de transformation (TR1).

9. Dispositif pour fournir des tensions d'alimentation selon la revendication 8 **caractérisé en ce qu'**il est prévu un condensateur (CG) aux armatures duquel la tension de sortie du premier organe de transformation est prélevée via le transformateur (TRA).

10. Dispositif pour fournir des tensions d'alimentation selon la revendication 8 ou 9 **caractérisé en ce que** le circuit de commande (COM) fournit des signaux de commande pour que les signaux de sortie dudit organe de transformation (TR1) puissent être transmis vers la pluralité d'organes de transformation de sortie (TRIO, TR11) via le transformateur (TRA).

11. Dispositif pour fournir des tensions d'alimentation selon l'une des revendications 1 à 10 **caractérisé en ce qu'**il présente une structure hiérarchisée comportant au moins un organe de transformation de sortie déportée vis-à-vis du premier organe de transformation (TR1).

12. Dispositif pour fournir des tensions d'alimentation selon l'une des revendications 1 à 11 **caractérisé en ce qu'**il est muni d'une commande de réglage associée au pupitre de commande (PUP) en vue de fournir des tensions aux bornes de sortie (OU7) et (OU8) de nature pulsée, des tensions continues ou encore des tensions de valeurs sinusoïdales.

13. Dispositif pour fournir des tensions d'alimentation selon la revendication 12 **caractérisé en ce que** les commandes de réglages sont constituées par un programme inséré dans une commande déportée disposée notamment dans un smartphone, ou un boitier en radiofréquence Bluetooth.

14. Dispositif pour fournir des tensions d'alimentation selon l'une des revendications 1 à 13 **caractérisé en ce qu'**il comporte un circuit de combinaison (COMB) qui permet de fournir des tensions désirées sur deux bornes de sortie (OU7 et OU8) en fonction des commandes données au niveau du pupitre de commande PUP.

15. Dispositif pour fournir des tensions d'alimentation selon l'une des revendications 1 à 14 **caractérisé en ce qu'**il comporte un circuit de correction COR pour corriger les tensions de sortie dudit dispositif.
